# FASCICULE DE BREVET EUROPEEN

(11) **EP 2 689 133 B1**
(45) Date de publication et mention de la délivrance du brevet: **15.01.2020**
(21) Numéro de dépôt: 12711142.5
(22) Date de dépôt: 21.03.2012
(51) Int. Cl.: F04B 7/04, F04B 15/02, C10J 3/30, C10J 3/50

(54) **DISPOSITIF POMPE DE TRANSFERT A PISTONS, PROCEDE DE TRANSFERT DE MATIERE SOLIDE GRANULAIRE UTILISANT UN TEL DISPOSITIF, APPLICATION DU PROCEDE A L'ALIMENTATION D'UN REACTEUR DE GAZEIFICATION**
KOLBENARTIGE FÖRDERPUMPENVORRICHTUNG, VERFAHREN ZUM ÜBERTRAGEN VON TEILCHENFÖRMIGEM FESTSTOFFEN MIT EINER SOLCHEN VORRICHTUNG, ANWENDUNG ZUR VERSORGUNG EINES VERGASUNGSREAKTORS
PISTON-TYPE TRANSFER PUMP DEVICE, METHOD FOR TRANSFERRING PARTICULATE SOLID MATTER USING SUCH A DEVICE, APPLICATION OF THE METHOD TO THE FEEDING OF A GASIFICATION REACTOR

(30) Priorité: 22.03.2011 FR 1152361
(43) Date de publication de la demande: 29.01.2014
(73) Titulaire: Commissariat à l'Énergie Atomique et aux Énergies Alternatives, 75015 Paris (FR)
(72) Inventeur: GROS D'AILLON, Luc-François, F-38320 Brie et Angonnes (FR); CHATAING, Thierry, F-38250 Lans-en-Vercors (FR); ROUGE, Sylvie, F-38320 Brie et Angonnes (FR)
(74) Mandataire: Ahner, Philippe
(86) Numéro de dépôt international: PCT/EP2012/054984
(87) Numéro de publication internationale: WO 2012/126939

(56) Documents cités:
- FR-A- 782 769
- FR-A1- 2 564 525
- FR-A1- 2 644 521
- GB-A- 1 508 665
- US-A- 2 169 807
- US-A- 2 261 471
- US-A- 2 705 835
- US-A- 3 464 359
- US-A- 3 695 788
- US-A- 4 416 596
- US-A1- 2008 118 376

## Description

### DOMAINE TECHNIQUE

L'invention concerne un nouveau dispositif pompe de transfert de type à pistons.

Elle concerne plus particulièrement un procédé de transfert de matière solide granulaire utilisant ce nouveau dispositif entre deux chambres sous pression différente. On précise ici que l'on comprend que, dans le contexte de l'invention, le terme « granulaire » désigne le fait que la matière solide à transférer est sous forme de particules ou grains, de granulométrie variable ou non et de dimensions submillimétriques, millimétriques ou centimétriques et qui peut être plus ou moins mélangée à un liquide.

L'application préférée visée est l'alimentation en biomasse d'un réacteur de gazéification.

### ART ANTÉRIEUR

Ce que l'on désigne sous l'appellation « biomasse », regroupe sous l'un de ses usages tout matériau inhomogène d'origine biologique, qui peut être quasi-sec, comme les résidus de scierie ou la paille, ou imbibé d'eau comme les déchets ménagers. De granulométrie variable, son transport s'avère problématique. Or, au vu de la valorisation de la biomasse qui est de plus en plus d'actualité, voire imposée, telle que par exemple par conversion thermochimique, le transport de cette matière solide se généralise et doit répondre à des critères exigeants, comme l'absence de pertes, et ce dans des conditions de coût optimales. Les particules solides de la biomasse sont des poudres ou des copeaux, par exemple des particules cellulosiques, telles des fins copeaux de végétaux, comme du bois. De nombreux systèmes de transport ou convoyage en solide existent, y compris concernant la biomasse : les convoyeurs, typiquement des systèmes de vis sans fin, les systèmes à transfert pneumatique ou des systèmes à écluse rotative. Mais tous ces systèmes ont été développés pour fonctionner à des pressions au voisinage de la pression atmosphérique, ou autrement dit pour de faibles écarts de pression entre zones en amont et en aval du convoyage ou transfert.

Or, lors du processus de valorisation, comme la conversion thermochimique, il faut, à partir de biomasse de nature et de granulométrie différentes stockée habituellement à la pression atmosphérique, pouvoir alimenter de manière continue un réacteur chimique (réacteur de gazéification), de type réacteur à lit fluidisé ou un réacteur à flux entraîné fonctionnant sous pression.

A ce jour, il n'existe guère qu'un type de dispositif dénommé en anglais « Lock hopper », conçu pour fonctionner dans ces conditions de transfert entre une chambre en amont sous pression atmosphérique et une chambre en aval sous pression élevée. Un dispositif « Lock hopper » utilise une ou plusieurs chambres de transfert intermédiaires pressurisées, à l'azote par exemple, ou des sas.

Plus précisément, le fonctionnement d'un tel dispositif « Lock hopper » peut être décrit de la manière suivante. On utilise une chambre de transfert, comprenant une vanne en amont, pour l'introduction d'un volume de particules solides, et une vanne en aval, pour le refoulement des particules solides dans la chambre d'alimentation de l'équipement considéré (réacteur chimique). Le fonctionnement est cyclique, chaque cycle se résumant aux étapes suivantes :
- introduction d'un volume de particules solides dans la chambre de transfert, le plus souvent par gravité, par ouverture de la vanne en amont, la vanne en aval étant maintenue fermée ;
- fermeture de la vanne en amont, la vanne aval étant maintenue fermée ;
- mise en pression du volume défini par la chambre de transfert, jusqu'à ce que la pression dans celle-ci atteigne la pression dans la chambre d'alimentation du réacteur chimique ;
- ouverture de la vanne en aval, ce qui permet le transfert des particules solides dans la chambre d'alimentation, en général par écoulement par gravité ;
- fermeture de la vanne en aval, la vanne en amont étant maintenue fermée, et évacuation du surplus de pression présent dans la chambre de transfert, le gaz évacué étant parfois stocké en vue de sa réutilisation.

Les principaux inconvénients d'un dispositif « Lock hopper » peuvent être résumés comme suit :
- un fonctionnement discontinu :
- une nécessaire bonne synchronisation du pilotage des vannes ;
- lors de la manipulation de matière à granulométrie variable, un possible endommagement du fonctionnement des vannes (obturation, fermeture non complète par ladite matière) ;
- une consommation d'énergie élevée, du fait chaque cycle supposant une compression et une détente du gaz, c'est-à-dire une consommation très importante de gaz de pressurisation avec des valeurs classiquement de l'ordre du dixième du débit massique véhiculé ;
- un investissement élevé ;
- un encombrement important et,
- éventuellement une pollution de l'aval du cycle.

Le document FR2564525A1 décrit un dispositif pompe de transfert selon le préambule de la revendication 1. On connaît du brevet US 4,150,759, un dispositif d'alimentation en charbon 9 d'un réacteur de gazéification constitué d'un piston dit flottant 27 maintenant un écartement entre deux pistons 21, 23 d'admission par l'intermédiaire d'une tige 25, les pistons d'admission coulissant dans une chemise tubulaire 11 et dégageant alternativement chacun une trémie d'admission 15, 17 en charbon 9. Les inconvénients du dispositif selon ce brevet sont nombreux et peuvent être résumés ainsi :
- la différence de pression qui a lieu entre la chambre de transfert A, B dans laquelle du charbon 9 est présent et la ligne 10 d'alimentation du réacteur de gazéification est brutale, ce qui est susceptible de gêner l'écoulement des particules dans la ligne 10. On peut considérer que cette variation de pression brutale est même susceptible de déplacer les particules à l'opposé de l'orifice d'alimentation 13 (décharge), c'est-à-dire vers la paroi supérieure interne de la chemise 11 ;
- un tel dispositif ne pourrait servir réellement à transférer une matière solide sous forme de particules susceptibles de s'agglomérer, telles que des fibres de bois : en effet, il est fort probable que de telles particules s'agglomèrent autour de la tige centrale 25 permettant de maintenir l'écartement entre pistons d'admission 21, 23 et s'accumulent à l'interface entre piston flottant 27 et chemise 11. Le coulissement du piston flottant 27 serait ainsi fortement entravé par ces agglomérations/accumulations de particules ;
- la chemise 11 sert de chambre de vérin d'actionnement des pistons 21, 23. D'une part, cela fige la pression de fonctionnement des pistons et d'autre part, cela génère un mouillage de paroi interne de chemise par le liquide hydraulique d'actionnement, ce qui est une source de pollutions des particules à transférer.

Autrement dit, le dispositif de transfert de charbon 9 selon ce document US 4,150,759 ne semble pas fiable et il ne peut réellement être envisagé pour transférer une matière solide sous forme de particules susceptibles de s'agglomérer, telle que la biomasse.

Le but général de l'invention est donc de proposer une nouvelle solution de transfert de matière solide granulaire entre deux chambres sous pressions différentes, qui ne présente pas les inconvénients des dispositifs selon l'art antérieur.

Un but de l'invention est de proposer un dispositif de transfert de matière solide granulaire entre deux chambres sous pressions différentes qui soit de fonctionnement simple, efficace et dont la consommation énergétique soit la plus faible possible.

Un autre but de l'invention est de proposer un dispositif de transfert comme ci-dessus qui nécessite un faible investissement, qui soit d'un faible encombrement, et qui présente une pollution en aval de son cycle de fonctionnement réduite.

### EXPOSÉ DE L'INVENTION

Pour ce faire, l'invention a pour objet un dispositif pompe de transfert à pistons, comprenant :
- une chemise tubulaire comprenant un premier orifice, dit orifice d'admission, en communication fluidique avec une première chambre, dite chambre d'admission et un deuxième orifice, dit orifice d'échappement, en communication fluidique avec une deuxième chambre, dite chambre d'échappement, apte à être sous une pression supérieure à la pression régnant dans la chambre d'admission ; l'orifice d'admission et celui d'échappement étant décalés longitudinalement selon l'axe de la chemise tubulaire en délimitant entre eux une troisième chambre, dite chambre de compression ;
- un premier piston, dit piston d'admission, apte à coulisser dans la chemise tubulaire entre une extrême position d'ouverture dans laquelle il dégage au moins partiellement l'orifice d'admission dans la chemise et une position extrême de fermeture dans laquelle il obture l'orifice d'admission tout en laissant au moins partiellement l'orifice d'échappement dégagé ;
- un deuxième piston, dit piston d'échappement, apte à coulisser dans la chemise tubulaire entre une position extrême de fermeture dans laquelle il obture l'orifice d'échappement tout en laissant l'orifice d'admission dégagé et une position extrême d'ouverture dans laquelle il dégage au moins partiellement l'orifice d'échappement.

Le piston d'admission et celui d'échappement sont mécaniquement indépendants et sont munis chacun à leur périphérie de segments d'étanchéité aptes à être en contact avec la surface interne de la chemise lors du coulissement des pistons.

Le piston d'échappement est apte à être maintenu dans sa position extrême de fermeture de l'orifice d'échappement jusqu'à ce que le piston d'admission atteigne une première position intermédiaire de fermeture dans laquelle il obture l'orifice d'admission et il délimite avec le piston d'admission un volume de la chambre de compression tel que la pression des gaz régnant en son sein est au moins égale à celle régnant dans la chambre d'échappement, le coulissement du piston d'échappement de sa position extrême de fermeture jusqu'à sa position d'ouverture permettant l'échappement du gaz comprimé dans la chambre d'échappement.

Avantageusement, l'orifice d'admission et l'orifice d'échappement sont diamétralement opposés par rapport à l'axe de la chemise tubulaire.

La chemise tubulaire peut comprendre avantageusement un troisième orifice, dit orifice d'équilibrage, diamétralement opposé à l'orifice d'échappement et également en communication fluidique avec la chambre d'échappement.

La première position intermédiaire de fermeture du piston d'admission est de préférence telle que la pression régnant dans la chambre de compression est sensiblement égale à celle régnant dans la chambre d'échappement.

Avantageusement, le coulissement du piston d'échappement est réalisé par le gaz comprimé lui-même lors de son échappement de la chambre de compression dans la chambre d'échappement. Ainsi, on peut prévoir avantageusement des moyens de récupération de l'énergie fournie par le coulissement du piston d'échappement de sa position extrême de fermeture jusqu'à sa position extrême d'ouverture.

Le piston d'admission est de préférence apte à être dans une deuxième position intermédiaire lorsque le piston d'échappement coulisse de sa position d'ouverture à sa position extrême de fermeture et dans lequel le coulissement du piston d'admission de sa deuxième position intermédiaire à sa position extrême d'ouverture est réalisé par le gaz comprimé dans la chambre de compression. Ici, encore, on peut prévoir avantageusement des moyens de récupération de l'énergie fournie par le coulissement du piston d'admission de sa deuxième position intermédiaire de fermeture jusqu'à sa position extrême d'ouverture.

Les moyens de récupération d'énergie peuvent être constitués d'un système bielle-manivelle ou d'accumulateurs à pression de gaz.

Le dispositif selon l'invention peut comprendre de préférence :
- une première trémie dite trémie d'admission pour réaliser la communication fluidique entre la chambre d'admission et l'orifice d'admission ;
- une deuxième trémie dite trémie d'échappement pour réaliser la communication fluidique entre la chambre d'échappement et l'orifice d'échappement.

De préférence, la trémie d'admission et la trémie d'échappement forment chacune une tubulure apte à s'ajuster autour de la chemise tubulaire.

La tubulure d'échappement délimite avantageusement intérieurement une quatrième chambre, dite chambre d'équilibrage, en communication fluidique avec l'orifice d'équilibrage lorsqu'emmanchée autour de la chemise tubulaire.

De préférence, les segments d'étanchéité sont disposés à la périphérie en bout des pistons, plus précisément à proximité des surfaces respectives des pistons, dites de compression, délimitant ladite chambre de compression.

La première chambre de l'un des dispositifs précédents peut être connectée ou alimentée par l'intermédiaire d'un dispositif d'alimentation, comportant une écluse rotative connectée ou reliée à ladite première chambre.

L'invention concerne également un procédé de transfert de matière solide granulaire entre deux chambres sous pressions différentes utilisant un dispositif décrit précédemment, selon lequel la chemise est en position sensiblement horizontale avec l'orifice d'admission et l'orifice d'échappement respectivement dans la partie supérieure et dans la partie inférieure de la chemise et selon lequel on réalise les étapes suivantes :
a/ positionnement du piston d'admission dans sa position extrême d'ouverture de sorte que de la matière solide granulaire peut s'écouler par gravité dans la chambre de compression et positionnement du piston d'échappement dans sa position extrême de fermeture ;
b/ déplacement du piston d'admission vers sa position extrême de fermeture de l'orifice d'admission et maintien du piston d'échappement dans sa position extrême de fermeture de sorte à déplacer horizontalement la matière solide granulaire et comprimer le gaz présents dans la chambre de compression ;
c/ lorsque le piston d'admission a atteint sa première position intermédiaire de fermeture, déplacement du piston d'échappement vers sa position d'ouverture jusqu'à mise en communication entre chambre de compression et orifice d'échappement ;
d/ déplacement du piston d'admission jusqu'à sa position extrême de fermeture de sorte à faire s'écouler par gravité la matière solide granulaire de la chambre de compression à travers l'orifice d'échappement.

La pression de la chambre d'admission est de préférence sensiblement égale à la pression atmosphérique et la différence de pression entre chambre d'admission et chambre d'échappement est avantageusement au moins égale à 10 bars, de préférence égale à 30 bars.

La position extrême de fermeture du piston d'admission est avantageusement celle dans laquelle il a atteint au moins le bord de l'orifice d'échappement de sorte à faire s'écouler par gravité toute la matière solide granulaire présente dans la chambre de compression.

Selon un mode de réalisation avantageux, la matière solide granulaire est en outre évacuée vers la chambre d'échappement par le gaz à la pression de la chambre d'échappement présent dans la chambre d'équilibrage par l'orifice d'équilibrage.

Une fois l'étape d/ réalisée, on effectue une étape e/ de retour du piston d'admission et de celui d'échappement respectivement dans sa position extrême d'ouverture et dans sa position extrême de fermeture.

La fréquence d'un cycle de transfert de l'étape a/ à l'étape e/ peut être relativement élevée, par exemple supérieure à 0,1Hz. Elle peut être comprise entre 0,1Hz et 10Hz, par exemple être de l'ordre d'un hertz.

L'invention concerne aussi l'application du procédé de transfert défini précédemment pour alimenter un réacteur de gazéification en biomasse. Dans cette application, on peut prévoir de préférence une alimentation du dispositif réalisée par un moyen de dosage, du type vis sans fin, agencé en amont de la trémie d'admission.

Ainsi l'invention telle que définie propose un transfert de matière solide granulaire par un dispositif de cinématique à mouvement alternatif axial, avec une chambre intermédiaire pouvant servir à la fois de compression du gaz à au moins la pression d'échappement, d'admission et d'échappement de la matière solide granulaire, par écoulement gravitaire, et qui passe alternativement dans les zones de moindre pression et de pression plus élevée.

Le transfert de matière solide selon l'invention est parfaitement étanche par les segments et rend possible un recyclage partiel du gaz utilisé pour le transfert (récupération de l'énergie du gaz comprimé dans la chambre de compression).

Comparativement aux procédés et dispositifs de transferts de matière solide granulaire selon l'état de l'art, le dispositif de transfert selon l'invention a un encombrement bien moindre, est de fonctionnement plus souple, nécessite une consommation d'énergie bien moindre, un investissement bien moindre, et permet une réduction de la pollution de l'aval du cycle.

Le débit volumique du dispositif selon l'invention est bien entendu fonction de la cylindrée (dimensions chemise et chambre de compression), du taux de remplissage, ainsi que de la fréquence du mouvement alternatif des pistons d'admission et d'échappement.

On vise selon l'invention un cycle idéal pour lequel la consommation d'énergie est réduite au produit mathématique du volume de matière transférée par l'écart de pression. En particulier, le piston d'échappement ne génère pas de travail, son déplacement contre la pression est égal à celui avec la même pression motrice, et sa consommation est théoriquement nulle.

Lors de la conception, on vise le fonctionnement le plus optimal possible, c'est-à-dire avec un débit volumique de la pompe alimentant le piston à fonction d'admission et de compression sensiblement égal à celui de la matière solide granulaire à transférer, au rapport de compression près. De plus, le débit volumique de la pompe alimentant le piston d'échappement est sensiblement nul, un écart éventuel étant prévu pour contrecarrer les frottements piston/chemise, dans la mesure où le piston d'échappement ne déplace pas de matière granulaire. En ce sens, il ne produit pas de travail et sa consommation d'énergie est sensiblement nulle, aux frottements près.

On peut prévoir avantageusement, à des fins de sûreté de fonctionnement, de détecter en continu les positions des pistons, de préférence par des capteurs à transformateurs différentiels fixés d'une part, aux tiges vissées aux pistons, et d'autre part, au corps de la pompe d'alimentation des pistons.

### BRÈVE DESCRIPTION DES DESSINS

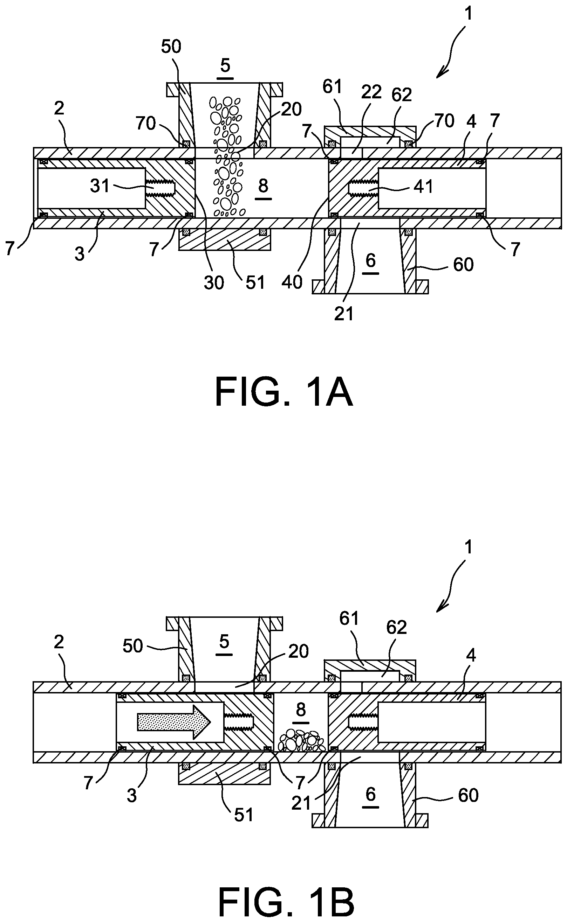

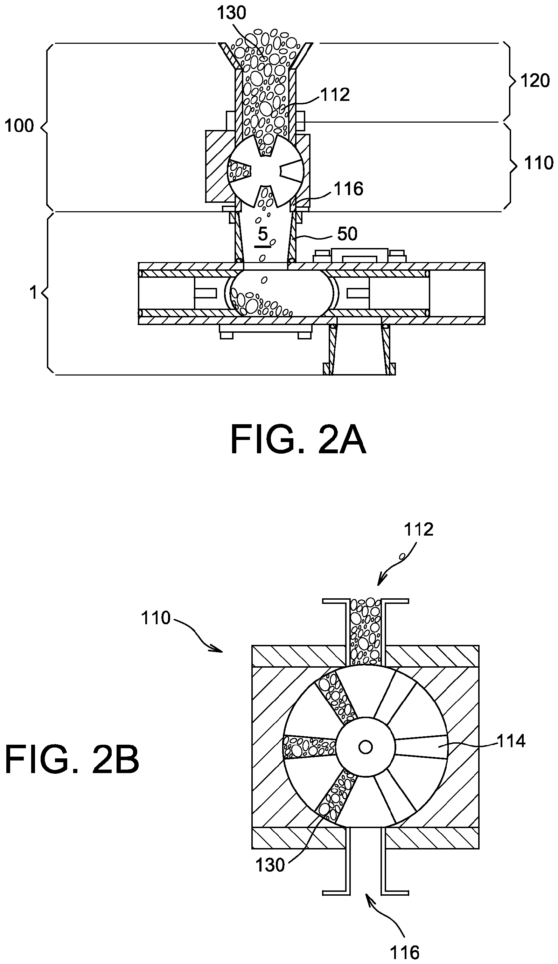

D'autres avantages et caractéristiques de l'invention ressortiront mieux à la lecture de la description détaillée faite à partir des figures 1A à 1F et 2A à 2B qui montrent les différentes étapes d'un cycle de fonctionnement d'un dispositif de transfert de biomasse selon un mode de réalisation, en vue d'alimenter un réacteur de gazéification.

### EXPOSÉ DÉTAILLÉ DE MODES DE RÉALISATION PARTICULIERS

Tel que représenté, le dispositif 1 de transfert selon l'invention permet de transférer de la matière solide sous forme granulaire, telle que de la biomasse dont les particules sont de granulométrie variable, depuis une chambre d'admission 5 sous pression atmosphérique à une chambre d'échappement 6 sous une pression de l'ordre de 30 bars.

Cette chambre d'échappement 6 constitue directement une chambre d'alimentation d'un réacteur de gazéification ou est reliée à un système distinct d'alimentation du réacteur, tel qu'un système de vis sans fin.

Le dispositif 1 comprend tout d'abord une chemise tubulaire 2 percée de deux orifices 20, 21 dont l'une d'admission 20 est en communication avec la chambre d'admission 5 et l'autre d'échappement 21 est en communication avec la chambre d'échappement 6. La chemise 2 comprend en outre un troisième orifice, dite orifice d'équilibrage 22 dont la fonction sera expliquée ci-après. Dans le mode de réalisation illustré, l'orifice d'admission 20 et l'orifice d'équilibrage 22 sont diamétralement opposés à celui d'échappement 21. En outre, l'orifice d'équilibrage 22 est en regard de celui d'échappement 21, et plus précisément au droit du bord de l'orifice d'échappement 21 le plus proche de l'admission. La chemise 2 peut être réalisée avantageusement en acier inoxydable chromé dur en interne.

A l'intérieur de la chemise tubulaire 2, sont montés coulissants deux pistons 3, 4 en étant tête bêche, c'est-à-dire avec leur surface de compression respective 30, 40 en regard l'une de l'autre. Les deux pistons 3, 4 sont mécaniquement indépendants et se déplacent durant tout un cycle de fonctionnement dans le même sens, c'est-à-dire suivant le même axe de coulissement, comme illustré aux figures 1A à 1F. Les pistons identiques 3, 4 peuvent être réalisés avantageusement en alliage léger chromé dur.

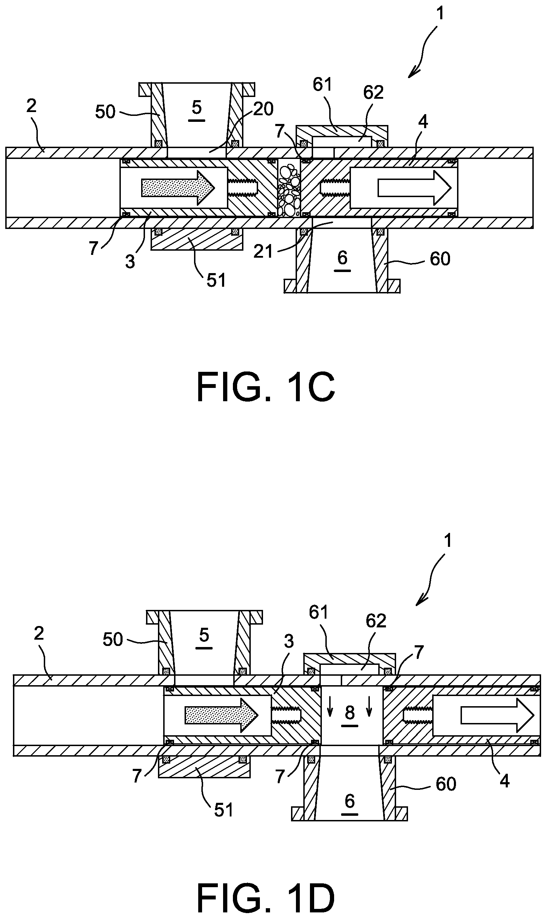

Le piston d'admission 3 est apte à se déplacer entre sa position extrême d'ouverture dans laquelle il dégage au moins partiellement l'orifice d'admission 20 et sa position extrême de fermeture dans laquelle il obture l'orifice d'admission 20 tout en laissant au moins partiellement l'orifice d'échappement 21 dégagé. Dans le mode de réalisation illustré, le piston d'admission dégage complètement l'orifice d'admission dans sa position extrême d'ouverture (figure 1A) et il a atteint le bord de l'orifice d'échappement dans sa position extrême de fermeture (figure 1D).

Par orifice dégagé, on entend qu'une communication fluidique est établie entre l'orifice et l'intérieur 8 de la chemise 2.

Le piston d'échappement 4, quant à lui est apte de se déplacer entre sa position extrême de fermeture dans laquelle il obture l'orifice d'échappement 21 tout en laissant l'orifice d'admission 20 dégagé et une position extrême d'ouverture dans laquelle il dégage au moins partiellement l'orifice d'échappement 20. Dans le mode de réalisation illustré, le piston d'échappement 4 obture l'orifice d'échappement 21 en étant à proximité immédiate de son bord le plus proche de l'admission 20 dans sa position extrême de fermeture (figure 1A) et il dégage complètement l'orifice d'échappement 21 en étant à proximité immédiate de son bord le plus éloigné de l'admission 20 dans sa position extrême d'ouverture (figure 1D).

Des segments 7 sont prévus à la périphérie en bout des pistons, c'est-à-dire disposés à la périphérie des pistons et à proximité de la surface de compression 30, 40 respective, pour assurer l'étanchéité axiale : ils sont ainsi en contact permanent avec la surface interne de la chemise 2 lors du coulissement des pistons 3, 4. Tous les segments 7 sont de préférence identiques entre eux et de type autolubrifiant. Ceux sont avantageusement des segments métalliques avec du Bronze, tel que du Ferro-bronze et de préférence de forme torique.

Par ailleurs, tel que représenté, les pistons 3, 4 sont taraudés intérieurement en leur fond 31, 41 pour recevoir par vissage leur tige de déplacement non représentée.

L'espace délimité entre piston d'admission 3 et piston d'échappement 4 est donc une chambre 8 à volume variable servant à la fois de chambre d'admission du gaz et de la matière solide granulaire depuis la chambre d'admission 5, de compression du gaz jusqu'à la pression de l'échappement 6, et de chambre d'échappement du gaz comprimé et de la matière solide granulaire vers la chambre d'échappement 6. Cette chambre 8 à volume variable est dite chambre de compression.

Dans le mode de réalisation illustré, la communication fluidique entre la chambre d'admission 5 et la chambre de compression 8 lorsque l'orifice d'admission est dégagé est assurée par une trémie d'admission 50. De même, la communication entre la chambre de compression 8 et la chambre d'échappement 6 est assurée par une trémie d'échappement 60. Comme montré, ces trémies 50, 60 forment chacune une tubulure 51, 61 apte à s'ajuster autour de la chemise tubulaire. En outre, la tubulure d'échappement 61 délimite intérieurement une quatrième chambre 62, dite chambre d'équilibrage, en communication fluidique avec l'orifice d'équilibrage 22 lorsqu'emmanchée autour de la chemise tubulaire 2. Pour le montage des tubulures 51, 61, on prévoit de réaliser une étanchéité au moyen de joints de type torique 70 et de les bloquer axialement le long de la chemise tubulaire 2, de préférence par des vis pointeau non montrées. Les trémies 50, 60 et tubulures 51, 61 sont de préférence en acier inoxydable.

Tel que représenté, pour réaliser le transfert de la matière solide granulaire le moins consommateur d'énergie, le dispositif selon l'invention 1 est en configuration horizontale installée, c'est-à-dire avec la chemise tubulaire 2 agencée sensiblement à l'horizontal, les trémies 5, 6 agencées sensiblement à la verticale avec l'orifice d'admission 20 vers le haut et l'orifice d'échappement 21 vers le bas. Une telle configuration du dispositif selon l'invention 1 permet un écoulement par gravité de la matière solide granulaire à la fois à l'admission, c'est-à-dire entre la chambre d'admission 5 et la chambre de compression 8, et à l'échappement, c'est-à-dire entre la chambre de compression 8 et la chambre d'échappement 6.

Les étapes d'un cycle de fonctionnement du dispositif 1 selon l'invention vont maintenant être expliquées.

On précise au préalable que l'on a symbolisé la matière solide granulaire à transférer sous forme de petits cercles et que l'on a symbolisé sous forme de flèches en noir un apport d'énergie aux pistons tandis que les flèches en blanc symbolisent une récupération d'énergie possible. Lorsque le piston d'admission 3 est dans sa position extrême d'ouverture, celui d'échappement est dans sa position extrême de fermeture et la matière solide granulaire s'écoule par gravité depuis la chambre d'admission 5 dans la chambre de compression 8 à l'intérieur de la chemise tubulaire 2 (figure 1A). La pression de la chambre de compression 8 est alors égale à celle de la chambre d'admission 5, soit sensiblement la pression atmosphérique.

Le piston d'admission 3 est alors déplacé vers le piston d'échappement 4 maintenu dans sa position extrême de fermeture, et donc obture dans un premier temps l'orifice d'admission 20 (figure 1B) et dans un deuxième temps vient augmenter la pression du gaz dans la chambre 8 jusqu'à ce qu'elle atteigne sensiblement celle dans la chambre d'échappement 6, soit de l'ordre de 30 bars (figure 1C). La montée en pression est possible par l'étanchéité en bout de pistons assurée par les segments 7. Lors de cette montée en pression dans la chambre 8 (figure 1B à 1C), le piston d'admission 3 pousse également la matière solide granulaire présente dans la chambre 8 qui était étalée sur le fond de chemise 2 lors de l'admission. Autrement dit, dans la position intermédiaire du piston d'admission de la figure 1C, la pression régnant dans la chambre 8 est sensiblement égale à 30 bars (pression de la chambre d'échappement 6).

Le piston d'échappement 4 est alors libéré et le piston d'admission 3 est encore déplacé jusqu'à ce qu'il atteigne sa position extrême de fermeture et donc qu'il affleure le bord de l'orifice d'échappement 21 (figure 1D). Dans cette position, toute la matière solide granulaire est évacuée par la trémie d'échappement 60. Cette évacuation se fait à la fois par écoulement gravitaire et par le volume de gaz à la pression d'échappement contenu dans la chambre d'équilibrage 62 emprisonné au préalable par la fermeture du piston d'échappement 4 et libéré par l'orifice d'équilibrage 22 lors de son dégagement. On a symbolisé par une flèche verticale vers le bas en figure 1D le sens de poussée du gaz supplémentaire présent dans la chambre d'équilibrage 62 qui chasse donc les particules solides. Ainsi, on s'assure à coup sûr d'une évacuation totale de la matière solide granulaire présente dans la chambre 8 et avantageusement à une vitesse augmentée qui permet d'augmenter la fréquence d'un cycle complet de fonctionnement du dispositif 1. Ici, le déplacement du piston d'échappement 4 peut être assuré uniquement par la pression du gaz à l'intérieur de la chambre 8 et l'énergie de ce déplacement peut être intégralement récupérée comme symbolisé par la flèche en blanc de la figure 1D. On procède alors à la phase retour du cycle.

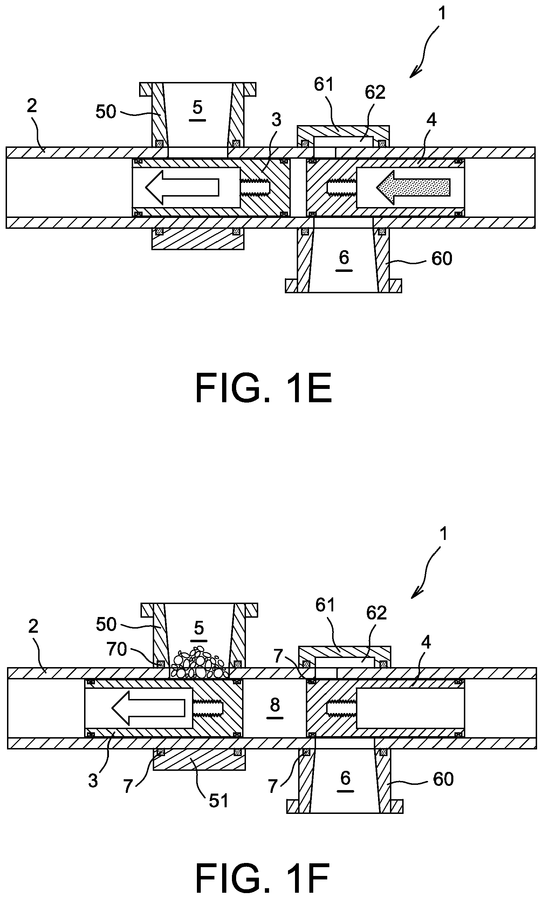

Le piston d'admission 3 est dans un premier temps ramené dans une position intermédiaire en s'écartant de l'orifice d'échappement puis, dans un deuxième temps, le piston d'admission 3 est maintenu dans cette position intermédiaire et celui d'échappement 4 est ramené dans sa position extrême de fermeture (figure 1E). Le retour du piston d'échappement 4 emprisonne à nouveau un volume de gaz sous pression dans la chambre d'équilibrage 62 et vient augmenter la pression régnant dans la chambre 8 qui est désormais vide de matière solide granulaire.

Le piston d'admission 3 est alors libéré tandis que le piston d'échappement 4 est maintenu dans sa position extrême de fermeture, la pression du gaz contenue dans la chambre 8 ramenant alors le piston d'admission 3 vers sa position extrême de fermeture (figure 1F).

Le volume de la chambre 8 vide de matière à transférer dans la position intermédiaire de retour du piston d'admission 3, et donc la pression qui y règne, est calibré de sorte que le retour du piston d'admission 3 se fasse sans apport d'énergie jusqu'à sa position initiale (figure 1A) où un nouveau cycle de transfert peut débuter.

De fait, il n'y a d'apport d'énergie nette que pendant la compression du gaz dans la chambre 8, ce qui correspond au volume solide transféré, aux frottements près. Tous les autres déplacements sont réversibles avec apport d'énergie dans un sens et récupération dans l'autre.

Il va de soi que le dispositif 1 selon l'invention peut être dimensionné en fonction de l'application visée. En particulier, en fonction du type de matière solide granulaire à transférer, on peut prévoir des orifices d'admission 20 et d'échappement 21 de quelques millimètres à quelques centimètres, et un angle de trémie 50, 60 de quelques degrés à environ 60°, de préférence entre 30 et 50°.

A titre d'application particulièrement intéressante, pour réaliser l'alimentation en matière carbonée d'un réacteur de gazéification de type RFE ou réacteur à lits fluidisés sous 30 bars de pression, il est nécessaire de dimensionner le dispositif 1 selon l'invention avec un débit de 35 cc/s de poudre à partir de la trémie d'admission 50 à pression atmosphérique et des températures voisines des conditions ambiantes. On prévoit que la quantité de matière de solide d'une biomasse arrivant dans la trémie d'admission 50 est dosée par un système de vis sans fin ou équivalent.

Pour ce faire, on prévoit le dimensionnement suivant :
- pistons 3, 4 identiques : longueur unitaire de 136 mm, diamètre nominal externe de 50 mm avec un jeu de montage adapté par rapport à la chemise 2, longueur totale de 136 mm avec deux segments d'étanchéité 7 à chacune de leur extrémité ;
- chemise tubulaire 2 : diamètre interne de 50 mm, longueur totale de 456 mm ; orifices d'admission 20 et d'échappement 21 identiques réalisés sur des génératrice opposées, d'entraxe de 124 mm, centrées à 166 mm de chaque extrémité de la chemise et d'une longueur unitaire de 50 mm et largeur unitaire de 25 mm ; orifice d'équilibrage 22 au droit du bord de l'orifice d'échappement 21 et de diamètre 10 mm.
- course du piston d'admission 3 (entre positions extrême d'ouverture et de fermeture) de 124 mm et du piston d'échappement 4 de 74 mm.

Ainsi, avec le dimensionnement donné, la cylindrée équivalente du dispositif 1 est de l'ordre de 100 cc et avec la pression d'échappement imposée de 30 bars, la force maximale subie par chacun des deux pistons 3, 4 est de l'ordre de 6 kN, et la fréquence d'un cycle de fonctionnement (figure lA-figure 1F - figure 1A) est de l'ordre du hertz. Le mouvement est transmis aux pistons par l'intermédiaire de vérins à huile vissés dans les pistons pleins en fond.

La matière solide granulaire 130 introduite dans le dispositif 1, peut provenir d'un dispositif d'alimentation 100 situé en amont de la chambre d'admission 5 (figure 2A).

Le dispositif d'alimentation 100 peut être composé d'une écluse rotative 110, par exemple à godet (figure 2B). L'écluse rotative comporte une vanne rotative 114, permettant de contrôler la quantité de matière solide granulaire 130 entrant par une entrée 112, et sortant par une sortie 116 de ladite écluse. La sortie 116 est directement connectée ou montée sur la trémie 50.

L'écluse rotative 110 peut être alimentée par exemple par une trémie d'alimentation de biomasse 120, connecté à l'entrée 112. La trémie d'alimentation peut être substituée par tout autre dispositif d'alimentation, comme par exemple un dispositif d'extracteur-doseur.

La biomasse s'écoule de préférence par effet de gravité entre la trémie d'alimentation et la chambre d'admission 5 du dispositif 1. L'ensemble des éléments précédents peuvent être connectés ou reliés entre eux de façon hermétique ou étanche, directement et/ou indirectement par l'intermédiaire de canalisation(s) non représentées.

L'invention qui vient d'être décrite définit ainsi un dispositif 1 de transfert de matière solide granulaire entre deux chambres 5, 6 sous pression différente qui est simple à réaliser, fiable, peu encombrant, qui limite la pollution en aval du cycle de transfert, qui nécessite une consommation d'énergie relativement faible et un investissement également faible.

La fiabilité du dispositif 1 selon l'invention est liée principalement au fait que l'augmentation de pression est progressive ce qui favorise l'écoulement des particules solides, l'écoulement des particules solides n'est à aucun moment entravé puisque la chambre de compression 8 à volume variable définie n'est pas occupée par un élément mécanique de transmission, et que lesdites particules n'entravent elles-mêmes aucun mouvement. En outre, les pistons d'admission et d'échappement peuvent être actionnés mécaniquement indépendamment l'un de l'autre par l'intermédiaire des tiges vissées en fond de piston et qui sont parties intégrantes des vérins hydrauliques d'actionnement bien distincts de la chemise tubulaire 2. Autrement dit, le circuit hydraulique d'actionnement des pistons 3, 4 est distinct du circuit de transfert proprement dit de la matière solide. Pour atteindre un très bon rendement, on utilise de préférence des vérins à haute pression, typiquement de quelques centaines à quelques milliers de bars.

La conception du dispositif 1 ne peut que limiter la pollution en aval du cycle de transfert puisque du fait d'un circuit d'actionnement des pistons 3, 4 indépendant du circuit de transfert, il ne peut y avoir de pollution de la chambre de transfert 8 par un élément du circuit d'actionnement, tel qu'un liquide hydraulique.

La consommation d'énergie requise par un dispositif selon l'invention est d'autant plus faible que, comme mentionné ci-dessus, il est possible de récupérer une partie des énergies de recul des pistons d'admission 3 et d'échappement.

En tant que moyens de récupération de cette énergie, on peut envisager un système de type bielle-manivelle avec volant d'inertie ou une solution purement hydraulique avec accumulateurs à pression de gaz. Les inventeurs pensent que cette solution à accumulateurs à pression de gaz est moins onéreuse, plus fiable et plus facile à optimiser avec un rendement énergétique du même type. Ainsi, on peut envisager une accumulation de gaz sous pression dans les accumulateurs à chaque fois qu'un piston se déplace avec la pression d'échappement, ce qui correspond aux positions des figures 1C et 1D pour le piston d'échappement 4 et aux positions des figures 1E et 1F pour le piston d'admission 3.

Les applications visées par l'invention sont très nombreuses, puisque bon nombre d'industries ou laboratoires sont confrontés au problème de transfert de matière solide.

En outre , bien que décrite exclusivement pour transfert de matière solide, le dispositif pompe selon l'invention peut tout aussi bien être utilisé pour transférer du liquide ou du gaz en augmentant leur pression.

## Revendications

1. Dispositif (1) pompe de transfert à pistons entre une première chambre (5), dite chambre d'admission, et une deuxième chambre (6), dite chambre d'échappement, comprenant :
- une chemise tubulaire (2) comprenant un premier orifice (20), dit orifice d'admission, en communication fluidique avec la chambre d'admission (5) et un deuxième orifice (21), dit orifice d'échappement, en communication fluidique avec la chambre d'échappement (6), l'orifice d'admission (20) et celui d'échappement (21) étant décalés longitudinalement selon l'axe de la chemise tubulaire (2) en délimitant entre eux une troisième chambre (8), dite chambre de compression,
- un premier piston (3), dit piston d'admission, monté coulissant dans la chemise tubulaire (2) entre une position extrême d'ouverture dans laquelle il dégage au moins partiellement l'orifice d'admission (20) dans la chemise (2) et une position extrême de fermeture dans laquelle il obture l'orifice d'admission (20) tout en laissant au moins partiellement l'orifice d'échappement (21) dégagé,
- un deuxième piston (4), dit piston d'échappement, monté coulissant dans la chemise tubulaire (2) entre une position extrême de fermeture dans laquelle il obture l'orifice d'échappement (21) tout en laissant l'orifice d'admission (20) dégagé et une position extrême d'ouverture dans laquelle il dégage au moins partiellement l'orifice d'échappement (21),
dispositif dans lequel le piston d'admission (3) et celui d'échappement (4) sont mécaniquement indépendants **caractérisé en ce que** les piston d'admission (3) et d'échappement (4) sont munis chacun à leur périphérie de segments d'étanchéité (7) en contact avec la surface interne de la chemise (2) lors du coulissement des pistons (3, 4),
**en ce que** ladite chambre d'échappement est à une pression supérieure à la pression régnant dans la chambre d'admission (5),
et **en ce que** les déplacements des pistons d'échappement (4) et d'admission (3) sont tels que le piston d'échappement (4) est maintenu dans sa position extrême de fermeture de l'orifice d'échappement (21) jusqu'à ce que le piston d'admission (3) atteigne une première position intermédiaire de fermeture dans laquelle il obture l'orifice d'admission (20) et il délimite avec le piston d'admission (3) un volume de la chambre de compression (8) tel que la pression des gaz régnant en son sein est au moins égale à celle régnant dans la chambre d'échappement (6), le coulissement du piston d'échappement (4) de sa position extrême de fermeture jusqu'à sa position d'ouverture permettant l'échappement du gaz comprimé dans la chambre d'échappement (6).

2. Dispositif pompe de transfert à pistons (1) selon la revendication 1, dans lequel l'orifice d'admission (20) et l'orifice d'échappement (21) sont diamétralement opposés par rapport à l'axe de la chemise tubulaire.

3. Dispositif pompe de transfert à pistons (1) selon la revendication 1 ou 2, dans lequel la chemise tubulaire comprend un troisième orifice (22), dit orifice d'équilibrage, diamétralement opposé à l'orifice d'échappement et également en communication fluidique avec la chambre d'échappement (6).

4. Dispositif pompe de transfert à pistons (1) selon l'une des revendications précédentes, dans lequel la première position intermédiaire de fermeture du piston d'admission est telle que la pression régnant dans la chambre de compression (8) est sensiblement égale à celle régnant dans la chambre d'échappement (6).

5. Dispositif pompe de transfert à pistons (1) selon l'une des revendications précédentes, dans lequel le coulissement du piston d'échappement est réalisé par le gaz comprimé lui-même lors de son échappement de la chambre de compression dans la chambre d'échappement.

6. Dispositif pompe de transfert à pistons selon la revendication 5, comprenant des moyens de récupération de l'énergie fournie par le coulissement du piston d'échappement de sa position extrême de fermeture jusqu'à sa position extrême d'ouverture, lesdits moyens de récupération d'énergie étant avantageusement constitués d'un système bielle-manivelle ou d'accumulateurs à pression de gaz.

7. Dispositif pompe de transfert à pistons selon l'une des revendications précédentes, dans lequel le piston d'admission (3) est dans une deuxième position intermédiaire lorsque le piston d'échappement (4) coulisse de sa position d'ouverture à sa position extrême de fermeture et dans lequel le coulissement du piston d'admission de sa deuxième position intermédiaire à sa position extrême d'ouverture est réalisé par le gaz comprimé dans la chambre de compression.

8. Dispositif pompe de transfert à pistons selon la revendication 7, comprenant des moyens de récupération de l'énergie fournie par le coulissement du piston d'admission de sa deuxième position intermédiaire de fermeture jusqu'à sa position extrême d'ouverture, lesdits moyens de récupération d'énergie étant avantageusement constitués d'un système bielle-manivelle ou d'accumulateurs à pression de gaz.

9. Dispositif pompe de transfert à pistons selon l'une des revendications précédentes, comprenant :
- une première trémie (50) dite trémie d'admission pour réaliser la communication fluidique entre la chambre d'admission (5) et l'orifice d'admission (20),
- une deuxième trémie (60) dite trémie d'échappement pour réaliser la communication fluidique entre la chambre d'échappement (6) et l'orifice d'échappement (21).

10. Dispositif pompe de transfert à pistons selon la revendication 9, dans lequel la trémie d'admission (50) et la trémie d'échappement (60) forment chacune une tubulure (51, 61) apte à s'ajuster autour de la chemise tubulaire, avantageusement la tubulure d'échappement (61) délimitant intérieurement une quatrième chambre, dite chambre d'équilibrage, en communication fluidique avec l'orifice d'équilibrage lorsqu'emmanchée autour de la chemise tubulaire.

11. Dispositif pompe de transfert à pistons selon l'une des revendications précédentes, dans lequel les segments d'étanchéité (7) sont disposés à la périphérie en bout des pistons (3, 4).

12. Dispositif pompe de transfert à pistons selon l'une des revendications précédentes, comportant un dispositif d'alimentation (100) comprenant une écluse rotative (110) connecté à la première chambre (5) du dispositif (1).

13. Procédé de transfert de matière solide granulaire (P) entre deux chambres (5, 6) sous pressions différentes utilisant un dispositif (1) selon l'une quelconque des revendications 1 à 12, selon lequel la chemise (2) est en position sensiblement horizontale avec l'orifice d'admission (20) et l'orifice d'échappement (21) respectivement dans la partie supérieure et dans la partie inférieure de la chemise et selon lequel on réalise les étapes suivantes :
a/ positionnement du piston d'admission dans sa position extrême d'ouverture de sorte que de la matière solide granulaire (P) s'écoule par gravité dans la chambre de compression et positionnement du piston d'échappement dans sa position extrême de fermeture,
b/ déplacement du piston d'admission vers sa position extrême de fermeture de l'orifice d'admission et maintien du piston d'échappement dans sa position extrême de fermeture de sorte à déplacer horizontalement la matière solide granulaire et comprimer le gaz présents dans la chambre de compression,
c/ lorsque le piston d'admission a atteint sa première position intermédiaire de fermeture, déplacement du piston d'échappement vers sa position extrême d'ouverture jusqu'à mise en communication entre chambre de compression et orifice d'échappement,
d/ déplacement du piston d'admission jusqu'à sa position extrême de fermeture de sorte à faire s'écouler par gravité la matière solide granulaire de la chambre de compression à travers l'orifice d'échappement.

14. Procédé de transfert selon la revendication 13, selon lequel la différence de pression entre chambre d'admission (5) et chambre d'échappement (6) est au moins égale à 10 bars, de préférence égale à 30 bars.

15. Procédé de transfert selon la revendication 13 ou 14, selon lequel la position extrême de fermeture du piston d'admission est celle dans laquelle il a atteint au moins le bord de l'orifice d'échappement de sorte à faire s'écouler par gravité toute la matière solide granulaire présente dans la chambre de compression.

16. Procédé de transfert selon l'une quelconque des revendications 13 à 15, selon lequel la matière solide granulaire est en outre évacuée vers la chambre d'échappement par le gaz à la pression de la chambre d'échappement présent dans la chambre d'équilibrage par l'orifice d'équilibrage.

17. Procédé de transfert selon l'une des revendications 13 à 16, selon lequel une fois l'étape d/ réalisée, on effectue une étape e/ de retour du piston d'admission et de celui d'échappement respectivement dans sa position extrême d'ouverture et dans sa position extrême de fermeture.

18. Procédé de transfert selon la revendication 17, selon lequel la fréquence d'un cycle de transfert de l'étape a/ à l'étape e/ est supérieure à 0,1Hz.

19. Application du procédé de transfert selon l'une quelconque des revendications 13 à 18, pour alimenter un réacteur de gazéification en biomasse avantageusement alimenté par un moyen de dosage, du type vis sans fin, agencé en amont de la trémie d'admission.

## Patentansprüche

1. Kolbenartige Förderpumpenvorrichtung (1) zwischen einer ersten Kammer (5), genannt Zugangskammer, und einer zweiten Kammer (6), genannt Auslasskammer, umfassend:
- eine rohrförmige Buchse (2), umfassend eine erste Öffnung (20), genannt Zugangsöffnung, in fluidischer Kommunikation mit der Zugangskammer (5), und eine zweite Öffnung (21), genannt Auslassöffnung, in fluidischer Kommunikation mit der Auslasskammer (6), wobei die Zugangsöffnung (20) und die Auslassöffnung (21) longitudinal entlang der Achse der rohrförmigen Buchse (2) versetzt sind, wobei sie zwischen sich eine dritte Kammer (8) begrenzen, genannt Kompressionskammer,
- einen ersten Kolben (3), genannt Zugangskolben, der in der rohrförmigen Buchse (2) verschiebbar montiert ist zwischen einer Öffnungsendposition, in der er wenigstens teilweise die Zugangsöffnung (20) in der Buchse (2) freigibt, und einer Schließendposition, in der er die Zugangsöffnung (20) verschließt, wobei er die Auslassöffnung (21) wenigstens partiell frei lässt,
- einen zweiten Kolben (4), genannt Auslasskolben, der in der rohrförmigen Buchse (2) verschiebbar montiert ist zwischen einer Schließendposition, in der er die Auslassöffnung (21) verschließt, wobei er die Zugangsöffnung (20) frei lässt, und einer Öffnungsendposition, in der er wenigstens partiell die Auslassöffnung (21) freigibt,
bei welcher Vorrichtung der Zugangskolben (3) und der Auslasskolben (4) mechanisch voneinander unabhängig sind, **dadurch gekennzeichnet, dass** der Zugangskolben (3) und der Auslasskolben (4) jeweils an ihrem Umfang mit Abdichtungssegmenten (7) ausgestattet sind, die während der Verschiebung der Kolben (3, 4) in Kontakt mit der Innenoberfläche der Buchse (2) sind, dass die Auslasskammer bei einem Druck größer als der Druck ist, der in der Zugangskammer (5) herrscht, und dass die Verlagerungen des Auslasskolbens (4), und des Zugangskolbens (3) derart sind, dass der Auslasskolben (4) in seiner Endposition zum Schließen der Auslassöffnung (21) gehalten wird, bis der Zugangskolben (3) eine erste Schließzwischenposition erreicht, in der er die Zugangsöffnung (20) verschließt, und er mit dem Zugangskolben (3) ein Volumen der Kompressionskammer (8) derart begrenzt, dass der Gasdruck, der in ihrem Inneren herrscht, wenigstens gleich jenem ist, der in der Auslasskammer (6) herrscht, wobei die Verschiebung des Auslasskolbens (4) von seiner Schließendposition bis zu seiner Öffnungsposition das Auslassen des Gases ermöglicht, das in der Auslasskammer (6) komprimiert ist.

2. Kolbenartige Förderpumpenvorrichtung (1) nach Anspruch 1, bei der die Zugangsöffnung (20) und die Auslassöffnung (21) diametral bezüglich der Achse der rohrförmigen Buchse entgegengesetzt sind.

3. Kolbenartige Förderpumpenvorrichtung (1) nach Anspruch 1 oder 2, bei der die rohrförmige Buchse eine dritte Öffnung (22) umfasst, genannt Ausgleichsöffnung, die diametral entgegengesetzt zur Auslassöffnung und ebenfalls in fluidischer Kommunikation mit der Auslasskammer (6) ist.

4. Kolbenartige Förderpumpenvorrichtung (1) nach einem der vorhergehenden Ansprüche, bei der die erste Schließzwischenposition des Zugangskolbens derart ist, dass der Druck, der in der Kompressionskammer (8) herrscht, im Wesentlichen gleich jenem ist, der in der Auslasskammer (6) herrscht.

5. Kolbenartige Förderpumpenvorrichtung (1) nach einem der vorhergehenden Ansprüche, bei der die Verschiebung des Auslasskolbens durch das komprimierte Gas selbst während seines Auslasses von der Kompressionskammer in die Auslasskammer realisiert wird.

6. Kolbenartige Förderpumpenvorrichtung nach Anspruch 5, umfassend Mittel zur Rückgewinnung der Energie, die durch die Verschiebung des Auslasskolbens von seiner Schließendposition bis zu seiner Öffnungsendposition geliefert wird, wobei die Energierückgewinnungsmittel vorzugsweise durch ein Pleuel-Kurbel-System oder durch Gasdruckakkumulatoren gebildet sind.

7. Kolbenartige Förderpumpenvorrichtung nach einem der vorhergehenden Ansprüche, bei der der Zugangskolben (3) in einer zweiten Zwischenposition ist, während der Auslasskolben (4) sich von seiner Öffnungsposition zu seiner Schließendposition verschiebt, und bei der die Verschiebung des Zugangskolbens von seiner zweiten Zwischenposition zu seiner Öffnungsendposition durch das komprimierte Gas in der Kompressionskammer realisiert wird.

8. Kolbenartige Förderpumpenvorrichtung nach Anspruch 7, umfassend Mittel zur Rückgewinnung der Energie, die durch die Verschiebung des Zugangskolbens von seiner zweiten Schließzwischenposition bis zu seiner Öffnungsendposition geliefert wird, wobei die Energierückgewinnungsmittel vorzugsweise durch ein Pleuel-Kurbel-System oder durch Gasdruckakkumulatoren gebildet sind.

9. Kolbenartige Förderpumpenvorrichtung nach einem der vorhergehenden Ansprüche, umfassend:
- einen ersten Trichter (50), genannt Zugangstricher, zum Realisieren der fluidischen Kommunikation zwischen der Zugangskammer (5) und der Zugangsöffnung (20),
- einen zweiten Trichter (60), genannt Auslasstrichter, zum Realisieren der fluidischen Kommunikation zwischen der Auslasskammer (6) und der Auslassöffnung (21).

10. Kolbenartige Förderpumpenvorrichtung nach Anspruch 9, bei der der Zugangstricher (50) und der Auslasstrichter (60) jeweils einen Stutzen (51, 61) bilden, der dazu ausgelegt ist, sich um die rohrförmige Buchse herum anzupassen, wobei vorzugsweise der Auslassstutzen (61) innen eine vierte Kammer begrenzt, genannt Ausgleichskammer, die im eingesetzten Zustand um die rohrförmige Buchse herum in fluidischer Kommunikation mit der Ausgleichsöffnung ist.

11. Kolbenartige Förderpumpenvorrichtung nach einem der vorhergehenden Ansprüche, bei der die Abdichtungssegmente (7) am Umfang beim Ende der Kolben (3, 4) angeordnet sind.

12. Kolbenartige Förderpumpenvorrichtung nach einem der vorhergehenden Ansprüche, umfassend eine Versorgungsvorrichtung (100), die eine Drehschleuse (110) umfasst, die mit der ersten Kammer (5) der Vorrichtung (1) verbunden ist.

13. Verfahren zur Förderung von festem granularem Material (P) zwischen zwei Kammern (5, 6) unter verschiedenen Drücken unter Verwendung einer Vorrichtung (1) nach einem der Ansprüche 1 bis 12, bei dem die Buchse (2) in einer im Wesentlichen horizontalen Position ist, mit der Zugangsöffnung (20) und der Auslassöffnung (21) im oberen Teil beziehungsweise im unteren Teil der Buchse, und bei dem man die folgenden Schritte realisiert:
a/ Positionieren des Zugangskolbens in seiner Öffnungsendposition derart, dass das feste granulare Material (P) durch Schwerkraft in die Kompressionskammer rinnt, und Positionieren des Auslasskolbens in seiner Schließendposition,
b/ Verlagern des Zugangskolbens in Richtung seiner Endposition zum Schließen der Zugangsöffnung, und Halten des Auslasskolbens in seiner Schließendposition derart, dass das feste granulare Material horizontal verlagert wird und das Gas komprimiert wird, das in der Kompressionskammer vorhanden ist,
c/ wenn der Zugangskolben seine erste Schließzwischenposition erreicht hat, Verlagern des Auslasskolbens in Richtung seiner Öffnungsendposition, bis die Kommunikation zwischen der Kompressionskammer und der Auslassöffnung hergestellt ist,
d/ Verlagern des Zugangskolbens bis zu seiner Schließendposition derart, dass das feste granulare Material von der Kompressionskammer durch die Auslassöffnung rinnt.

14. Förderverfahren nach Anspruch 13, bei dem die Druckdifferenz zwischen der Zugangskammer (5) und der Auslasskammer (6) wenigstens gleich 10 Bar ist, vorzugsweise gleich 30 Bar.

15. Förderverfahren nach Anspruch 13 oder 14, bei dem die Schließendposition des Zugangskolbens jene ist, in der er wenigstens den Rand der Auslassöffnung erreicht hat, derart, dass das gesamte feste granulare Material, das in der Kompressionskammer vorhanden ist, durch Schwerkraft rinnt.

16. Förderverfahren nach einem der Ansprüche 13 bis 15, bei dem das feste granulare Material ferner zu der Auslasskammer abgeführt wird durch das Gas bei dem Druck der Auslasskammer, vorhanden in der Ausgleichskammer, durch die Ausgleichsöffnung.

17. Förderverfahren nach einem der Ansprüche 13 bis 16, bei dem man dann, wenn der Schritt d/ realisiert ist, einen Schritt e/ zur Rückführung des Zugangskolbens und des Auslasskolbens in seine Öffnungsendposition beziehungsweise seine Schließendposition durchführt.

18. Förderverfahren nach Anspruch 17, bei dem die Frequenz eines Förderzyklus vom Schritt a/ bis zum Schritt e/ größer als 0,1 Hz ist.

19. Anwendung des Förderverfahrens nach einem der Ansprüche 13 bis 18, zum Versorgen eines Reaktors zur Vergasung von Biomasse, der vorzugsweise durch ein Dosiermittel vom Typ Endlosschraube versorgt wird, angeordnet stromaufwärts des Zugangstrichters.

## Claims

1. Piston pump device (1) for transfer between a first chamber (5) called the inlet chamber, and a second chamber (6) called the exhaust chamber, comprising:
- a tubular sleeve (2) comprising a first orifice (20) called the inlet orifice in fluid communication with the inlet chamber (5), and a second orifice (21) called the exhaust orifice in fluid communication with the exhaust chamber (6), the inlet orifice (20) and the exhaust orifice (21) being offset longitudinally along the axis of the tubular sleeve (2), delimiting a third chamber (8) called the compression chamber between them;
- a first piston (3) called the inlet piston, sliding in the tubular sleeve (2) between an extreme open position in which it at least partially exposes the inlet orifice (20) in the sleeve (2) and an extreme closed position in which it closes off the inlet orifice (20) while at least partially leaving the exhaust orifice (21) exposed;
- a second piston (4) called the exhaust piston, sliding in the tubular sleeve (2) between an extreme closed position in which it closes off the exhaust orifice (21) while leaving the inlet orifice (20) exposed, and an extreme open position in which it at least partially exposes the exhaust orifice (21);
device in which the inlet piston (3) and the exhaust piston (4) are mechanically independent **characterized in that** the inlet piston (3) and the exhaust piston (4) are each fitted with sealing rings (7) around their periphery in contact with the internal surface of the sleeve (2) as the pistons (3, 4) slide,
**in that** said exhaust chamber is pressurised at a greater pressure than the pressure in the inlet chamber (5),
and **in that** movements of the exhaust piston (4) and inlet piston (3) are such that the exhaust piston (4) is held in its extreme position closing the exhaust orifice (21) until the inlet piston (3) reaches a first intermediate closed position in which it closes off the inlet orifice (20) and jointly with the inlet piston (3) delimits a volume of the compression chamber (8) such that the gas pressure inside it is at least equal to the gas pressure in the exhaust chamber (6), sliding of the exhaust piston (4) from its extreme closed position to its open position allowing compressed gas to pass into the exhaust chamber (6).

2. Piston transfer pump device (1) according to claim 1, in which the inlet orifice (20) and the exhaust orifice (21) are diametrically opposite each other on opposite sides of the axis of the tubular sleeve.

3. Piston transfer pump device (1) according to claim 1 or 2, in which the tubular sleeve comprises a third orifice (22) called the balancing orifice, diametrically opposite the exhaust orifice and also in fluid communication with the exhaust chamber (6).

4. Piston transfer pump device (1) according to one of the previous claims, in which the first intermediate closed position of the inlet piston is such that the pressure in the compression chamber (8) is approximately equal to the pressure in the exhaust chamber (6).

5. Piston transfer pump device (1) according to one of the previous claims, in which the exhaust piston slides under the action of the gas itself compressed as it passes from the compression chamber into the exhaust chamber.

6. Piston transfer pump device according to claim 5, comprising means of recovering energy supplied by the exhaust piston sliding from its extreme closed position to its extreme open position, said energy recovery means being advantageously composed of a connecting rod-crank system or gas pressure accumulators.

7. Piston transfer pump device according to one of the previous claims, in which the inlet piston (3) is in a second intermediate position when the exhaust piston (4) slides from its open position to its extreme closed position and in which sliding of the inlet piston from its second intermediate position to its extreme open position is actuated by the compressed gas in the compression chamber.

8. Piston transfer pump device according to claim 7, comprising means for recovering the energy supplied by the inlet piston sliding from its second intermediate closed position to its extreme open position, said energy recovery means being advantageously composed of a connecting rod-crank system or gas pressure accumulators.

9. Piston transfer pump device according to one of the previous claims, comprising:
- a first hopper (50) called the inlet hopper to create fluid communication between the inlet chamber (5) and the inlet orifice (20);
- a second hopper (60) called the exhaust hopper to create fluid communication between the exhaust chamber (6) and the exhaust orifice (21).

10. Piston transfer pump device according to claim 10, in which the inlet hopper (50) and the exhaust hopper (60) each forms a tubing (51, 61) that can be fitted around the tubular sleeve, the exhaust tubing (61) advantageously delimiting a fourth chamber on the inside called the balancing chamber, in fluid communication with the balancing orifice when fitted around the tubular sleeve.

11. Piston transfer pump device according to one of the previous claims, in which the sealing rings (7) are arranged around the periphery at the end of the pistons (3, 4).

12. Piston transfer pump device according to one of the previous claims, comprising a feed device (100) comprising a rotary lock (110) connected to said first chamber (5) of the device (1).

13. Method of transferring solid granular material (P) between two chambers (5, 6) at different pressures using a device (1) according to any one of claims 1 to 12, according to which the sleeve (2) is in an approximately horizontal position with the inlet orifice (20) and the exhaust orifice (21) in the upper part and the lower part respectively of the sleeve, and according to which the following steps are carried out:
a/ move the inlet piston into its extreme open position such that solid granular material (P) flows by gravity into the compression chamber and bring the exhaust piston into its extreme closed position;
b/ move the inlet piston into its extreme closed position of the inlet orifice and hold the exhaust piston in its extreme closed position so as to move the granular solid material horizontally and compress the gas present in the compression chamber;
c/ when the inlet piston has reached its first intermediate closed position, move the exhaust piston to its extreme open position until communication is created between the compression chamber and the exhaust orifice;
d/ move the inlet piston as far as its extreme closed position so as to make granular solid material flow by gravity from the compression chamber through the exhaust orifice.

14. Transfer method according to claim 13, according to which the pressure difference between the inlet chamber (5) and the exhaust chamber (6) is at least equal to 10 Bar, and preferably equal to 30 Bar.

15. Transfer method according to claim 13 or 14, according to which the extreme closed position of the inlet piston is the position in which it has reached at least the edge of the exhaust orifice so as to make all solid granular materials present in the compression chamber flow by gravity.

16. Transfer method according to any one of claims 13 to 15, according to which the granular solid material is also evacuated to the exhaust chamber by the gas at the pressure in the exhaust chamber present in the balancing chamber through the balancing orifice.

17. Transfer method according to one of claims 13 to 16, according to which once step d/ has been done, a step e/ is done to return the inlet piston and the exhaust piston into their extreme open and extreme closed positions respectively.

18. Transfer method according to claim 17, according to which the frequency of a transfer cycle from step a/ to step e/ is more than 0.1 Hz.

19. Application of the transfer method according to any one of claims 13 to 18, to feed a biomass gasification reactor, advantageously being fed by a delivery means such as a worm screw, arranged on the upstream side of the inlet hopper.
